Europäisches Patentamt

European Patent Office

Office européen des brevets

(19)

(11) Veröffentlichungsnummer: **0 391 506**

**A1**

# (12) EUROPÄISCHE PATENTANMELDUNG

(21) Anmeldenummer: **90250077.6**

(51) Int. Cl.⁵: **A01K 39/014, A01K 1/035**

(22) Anmeldetag: **19.03.90**

(30) Priorität: **01.04.89 DE 8903972 U**
**14.09.89 DE 8911093 U**

(43) Veröffentlichungstag der Anmeldung:
**10.10.90 Patentblatt 90/41**

(84) Benannte Vertragsstaaten:
**AT BE CH DE DK ES FR GB GR IT LI LU NL SE**

(71) Anmelder: **Effem GmbH**
**Eitzer Landstrasse**
**D-2810 Verden/Aller(DE)**

(72) Erfinder: **Hinrichs, Michael**
**Am Rüstkamp 9**
**D-2816 Kirchlinteln-Luttum(DE)**
Erfinder: **Homolla, Jürgen**

**Franzboas-Strasse 13**
**D-4950 Minden(DE)**
Erfinder: **Schormair, Eckart**
**Dorfstrasse 7**
**D-2816 Otersen(DE)**
Erfinder: **Czempik, Klaus, Dr.**
**Kornblumenweg 4**
**D-2810 Verden/Aller(DE)**
Erfinder: **Hornig, Rolf**
**Luttumer Dorfstrasse 20**
**D-2816 Kirchlinteln-Luttum(DE)**

(74) Vertreter: **Hoormann, Walter, Dr.-Ing. et al**
**FORRESTER & BOEHMERT**
**Widenmayerstrasse 4/I**
**D-8000 München 22(DE)**

(54) **Halter für in Portionsschälchen abgepacktes Vogelfutter.**

(57) Halter für in Portionsschälchen abgepacktes Vogelfutter mit einem sich bei Verwendung horizontal erstreckenden Aufnahmeabschnitt (10) mit einem eine Aufnahme (12) für das Portionsschälchen bildenden Durchbruch (14), und entweder mit einem sich an diesen anschließenden Griffabschnitt (18), einer zwischen Aufnahmeabschnitt (10) und Griffabschnitt (18) angeordneten, quer zu deren Erstreckung verlaufenden ersten Kerbe (20) und einem an die Kerbe (20) angrenzend rechtwinklig an das Plättchen angesetzten Stirnflansch (22), der an seinem dem Plättchen abgewandten Ende mit einer bei Verwendung vertikal mit der ersten Kerbe ausgerichteten zweiten Kerbe (24) versehen ist; oder mit einem an den Aufnahmeabschnitt (50) rechtwinklig und nach unten abstehend angesetzten Flansch (60), wobei eine an den Flansch angesetzte, sich in Längsrichtung des Aufnahmeabschnitts von diesem weg erstreckende flexible Rastplatte (70) vorgesehen ist, die sich schräg nach oben bis über die Oberkante des Aufnahmeabschnitts (50) hinweg erstreckt und an oder nahe ihrem höchsten Punkt eine erste, quer verlaufende Kerbe (72) aufweist, und ein sich in Längsrichtung des Aufnahmeabschnitts (50) von diesem weg erstreckenden, rechtwinklig an den Flansch (60) angesetzter Steg (62), der an seiner Unterkante bei Verwendung vertikal mit der ersten Kerbe (72) ausgerichtete zweite Kerben (64) aufweist.

Fig. 7

## Halter für in Portionsschälchen abgepacktes Vogelfutter

Die Erfindung betrifft einen Halter für in Portionsschälchen abgepacktes Vogelfutter.

Vogelfutter wird bisher regelmäßig aus einer Vorratspackung portionsweise in ein in den Vogelkäfig eingebrachtes Schälchen geschüttet bzw. bei Verbrauch nachgeschüttet, wobei das - aus hygienischen Gründen erforderliche - regelmäßige Reinigen des Schälchens oft unterbleibt.

Der Erfindung liegt die Aufgabe zugrunde, eine Vorrichtung zu schaffen, die eine Gabe des Vogelfutters in hygienisch einwandfreier Weise sicherstellt.

Erfindungsgemäß wird diese Aufgabe gelöst durch einen sich bei Verwendung horizontal erstreckenden Aufnahmeabschnitt mit einem um eine Aufnahme für das Portionsschälchen bildenden Durchbruch, einen sich an diesen anschließenden Griffabschnitt und einer zwischen Aufnahmeabschnitt und Griffabschnitt angeordneten, quer zu deren Erstreckung verlaufenden ersten Kerbe, und einen an die Kerbe angrenzend rechtwinklig an das Plättchen angesetzten Stirnflansch, der an seinem dem Plättchen abgewandten Ende mit einer bei Verwendung vertikal mit der ersten Kerbe ausgerichteten zweiten Kerbe versehen ist. Dabei wird vorgeschlagen, daß der Durchbruch in dem Aufnahmeabschnitt oval ausgebildet ist.

Eine bevorzugte Ausführungsform zeichnet sich dadurch aus, daß der Griffabschnitt die Form eines entlang seiner Nebenachse halbierten Ovals hat.

Weiter wird vorgeschlagen, daß der Griffabschnitt mit einer zu dem Stirnflansch hin offenen Griffausnehmung versehen ist, wobei die Griffausnehmung die Form eines entlang seiner Nebenachse halbierten Ovals haben kann.

Bevorzugt ist ein Ausführungsbeispiel, das dadurch gekennzeichnet ist, daß der Stirnflansch mit einer die zweite Kerbe ausbildenden Nase versehen ist.

Eine bevorzugte Ausführungsform zeichnet sich aus durch einen um den Aufnahmeabschnitt umlaufenden Flansch, wobei der umlaufende Flansch schräg mit in Richtung auf den Stirnflansch hin zunehmender Höhe ausgebildet sein kann.

Eine alternative Ausführungsform der Erfindung ist gekennzeichnet durch einen sich bei Verwendung horizontal erstreckenden Aufnahmeabschnitt mit einem eine Aufnahme für das Portionsschälchen bildenden Durchbruch und einen an den Aufnahmeabschnitt rechtwinklig und nach unten abstehend angesetzten Flansch, wobei eine an den Flansch angesetzte, sich in Längsrichtung des Aufnahmeabschnitts von diesem weg erstreckende flexible Rastplatte vorgesehen ist, die sich schräg nach oben bis über die Oberkante des Aufnahmeabschnitts hinweg erstreckt und an oder nahe ihrem höchsten Punkt eine erste, quer verlaufende Kerbe aufweist; und ein sich in Längsrichtung des Aufnahmeabschnitts von diesem weg erstreckender, rechtwinklig an den Flansch angesetzter Steg, der an seiner Unterkante bei Verwendung vertikal mit der ersten Kerbe ausgerichtete zweite Kerben aufweist.

Die erfindungsgemäße Anordnung zumindestens einer für die Halterung zwischen dem Querstreben eines Vogelkäfigs notwendigen Kerben auf einer flexiblen Rastplatte sorgt durch die halterseitig vorhandene Rückstellkraft dieses Elements für einen sicheren und festen Sitz des Halters zwischen den Querstreben und ermöglicht den Einsatz des erfindungsgemäßen Halters auch bei unterschiedlichem Abstand zwischen diesen.

Dabei wird vorgeschlagen, daß der Durchbruch in dem Aufnahmeabschnitt oval ausgebildet ist.

Vorzugsweise ist der Steg in Form eines entlang seiner Nebenachse halbierten Ovals ausgebildet, das sich bis über das vom Aufnahmeabschnitt abgewandte Ende der Rastplatte hinaus erstreckt, mit beiden Enden rechtwinklig an den Flansch angesetzt ist und zwei entsprechend ausgerichtete zweite Kerben aufweist. Durch diese Konstruktion ist eine besonders einfache und sichere Handhabung des erfindungsgemäßen Halters gewährleistet.

Die Erfindung schlägt weiterhin vor, daß die Rastplatte im Anschluß an die erste Kerbe mit einem Griffabschnitt versehen, der vorzugsweise halbkreisförmig ausgebildet, wobei die Grundseite dieses Halbkreises an der ersten Kerbe anliegt, und an seiner Oberseite geriffelt ist. Insbesondere bei gleichzeitiger Verwirklichung des Stegs in Form eines halbierten Ovals und der Rastplatte mit einem entsprechend ausgebildeten Griffabschnitt ist die Handhabung des erfindungsgemäßen Halters besonders einfach und sicher. Dabei wird die Unterseite des Stegs vorzugsweise von einem oder zwei Fingern der Hand gehalten, wohingegen mit dem Daumen Druck auf den Griffabschnitt ausgeübt werden kann, um die Rastplatte vor dem Einsetzen herunterzudrücken und damit vorzuspannen, so daß diese mit entsprechender Rückstellkraft mit ihrer ersten Kerbe in die obere Querstrebe des Vogelkäfigs einrastet.

Eine bevorzugte Ausführungsform zeichnet sich dadurch aus, daß die Rastplatte an ihrer Ober- und/oder Unterseite mit Verstärkungsstegen versehen ist. Auf diese Weise kann einem zu leichten Abbrechen der Rastplatte wirkungsvoll vorgebeugt werden.

In einer weiteren Ausführungsform der Erfindung ist der Steg im Bereich des Griffabschnitts mit in Richtung vom Aufnahmeabschnitt weg abnehmender Höhe ausgebildet. Hierdurch ist stets gewährleistet, daß der Griffabschnitt der Rastplatte weit genug heruntergedrückt werden kann und dabei nicht vom Steg behindert wird.

Die Erfindung sieht weiterhin einen um den Aufnahmeabschnitt umlaufenden Flansch vor, der vorzugsweise an seinem von der Rastplatte entfernten Ende abgeschrägt mit in Richtung von der Rastplatte weg abnehmender Höhe ausgebildet ist. Dieser Flansch dient im wesentlichen der Stabilität des Halters, wobei die Abschrägung an seinem von der Rastplatte entfernten Ende das Einsetzen des Halters zwischen die Querstreben des Vogelkäfigs erleichtert.

Schließlich schlägt die Erfindung für beide Alternativen noch vor, daß der Durchbruch zumindest in Teilbereichen mit nach innen gerichteten Vorsprüngen versehen ist. In komplementärer Ausbildung hierzu können die in den Kalter einsetzbaren Portionsschälchen mit einer entsprechenden Stufe versehen sein, so daß es nach Überwinden eines Druckpunktes beim Einsetzen des Portionsschälchens zu einem festen Verrasten desselben im Durchbruch des Aufnahmeabschnitts kommt, um den festen Sitz des Portionsschälchen, insbesondere bei Entnahme von Futter durch den Vogel, sicherzustellen. Weitere Merkmale und Vorteile der Erfindung ergeben sich aus der nachfolgenden Beschreibung, in der ein Ausführungsbeispiel der Erfindung anhand der Zeichnungen erläutert wird. Dabei zeigt:

Fig. 1 eine Draufsicht auf eine Ausführungsform des erfindungsgemäßen Halters;

Fig. 2 eine Schnittansicht entlang der Linie A-A von Fig. 1;

Fig. 3 eine Fig. 1 entsprechende Darstellung mit in den Halter eingesetztem Portionsschälchen;

Fig. 4 eine Fig. 2 entsprechende Darstellung mit in den Halter eingesetztem Portionsschälchen;

Fig. 5 eine Draufsicht auf eine Reihe von miteinander verbundenen Portionsschälchen;

Fig. 6 eine Schnittdarstellung entlang der Linie A-A von Fig. 5;

Fig. 7 eine Draufsicht auf die alternative Ausführungsform des erfindungsgemäßen Halters;

Fig. 8 eine Schnittansicht entlang der Linie A-A von Fig. 7;

Fig. 9 eine Fig. 7 entsprechende Darstellung mit eingesetztem Portionsschälchen;

Fig. 10 eine Fig. 8 entsprechende Darstellung mit eingesetztem Portionsschälchen; und

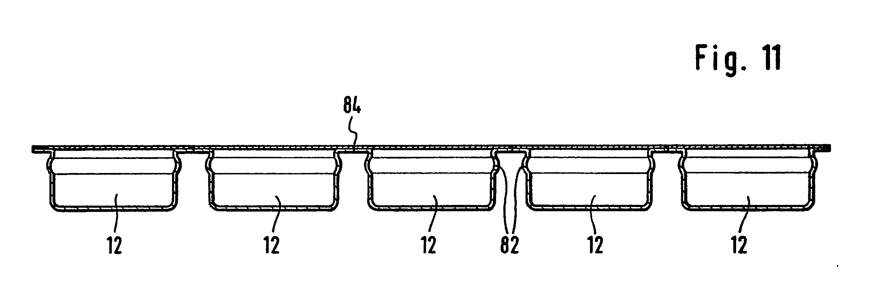

Fig. 11 eine Schnittdarstellung entlang der Linie A-A von Fig. 5, die eine alternative Ausführungsform der Portionsschälchen darstellt.

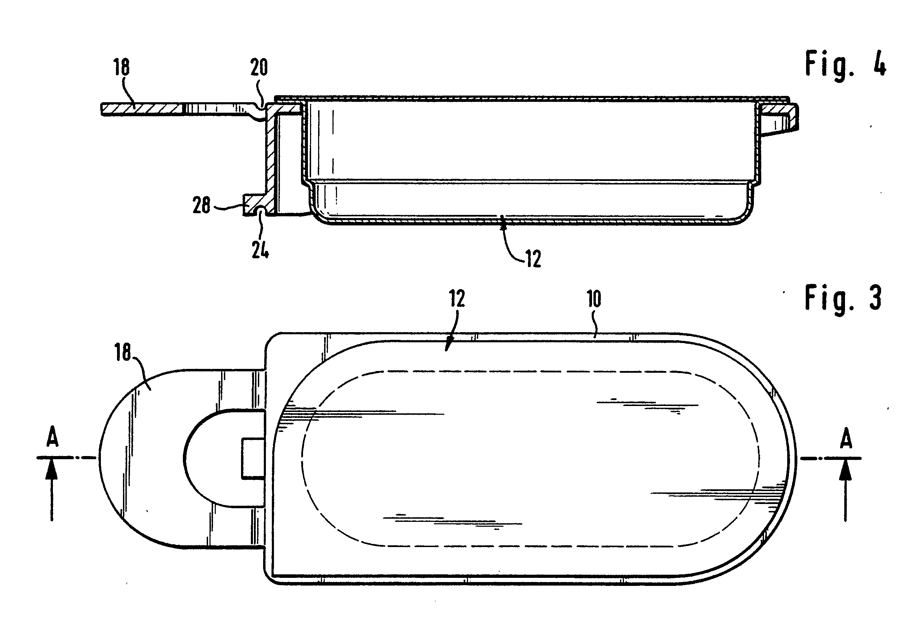

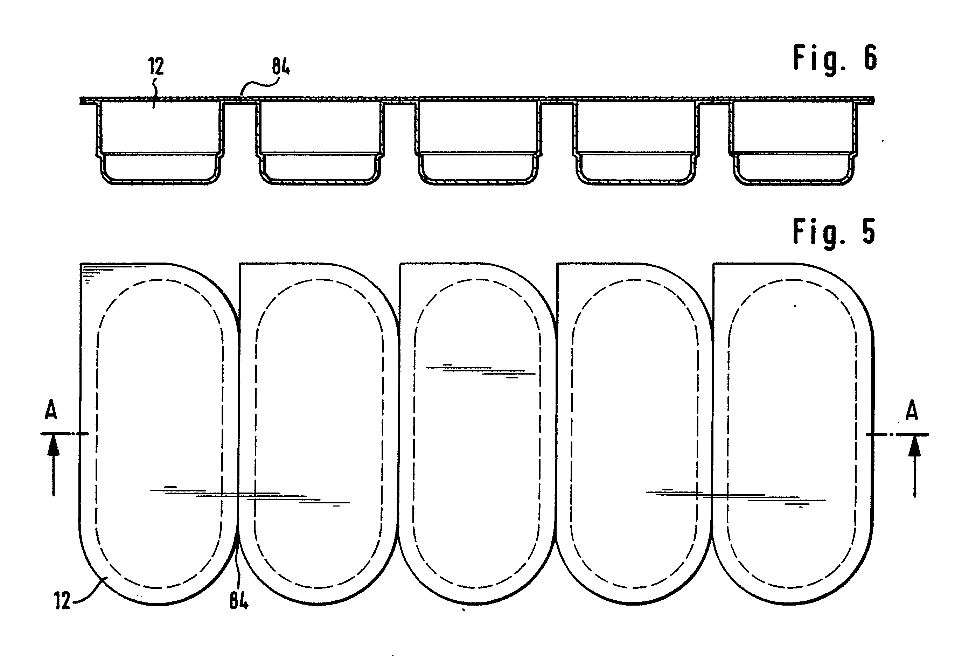

Die erste Ausführungsform des hier vorgeschlagenen Halters für in Portionsschälchen abgepacktes Vogelfutter besteht aus einem sich bei Verwendung horizontal erstreckenden Aufnahmeabschnitt 10, an den sich ein Griffabschnitt 18 anschließt. Der Aufnahmeabschnitt 10 weist einen zur Aufnahme des Portionsschälchens 12 (Fig. 3 und 4) dienenden Durchbruch 14 auf. Zwischen Aufnahmeabschnitt 10 und Griffabschnitt 18 ist eine quer zu deren Erstreckung verlaufende erste Kerbe 20, die nach oben offen ist, vorgesehen. An den zu den Aufnahmeabschnitt 10 weisenden Rand der Kerbe 20 ist ein sich rechtwinklig dazu erstreckender Stirnflansch 22 vorgesehen, der an seinem dem Aufnahmeabschnitt 10 abgewandten Ende mit einer bei Verwendung vertikal mit der ersten Kerbe 20 ausgerichteten zweiten Kerbe 24 versehen ist.

Der Durchbruch 14 in dem Aufnahmeabschnitt 10 ist oval ausgebildet und entspricht der Außenform des Napfes der in den Fig. 5 und 6 dargestellten Portionsschälchen, wobei der den Durchbruch 14 umgebende Rand als Auflage für den nach außen abstehenden Flansch der Portionsschälchen 12 dient.

Der Griffabschnitt 18 hat die Form eines entlang seiner Nebenachse halbierten Ovals und ist mit einer zu dem Stirnflansch 22 hin offenen Griffausnehmung 26 versehen, die ebenfalls die Form eines entlang ihrer Nebenachse halbierten Ovals hat.

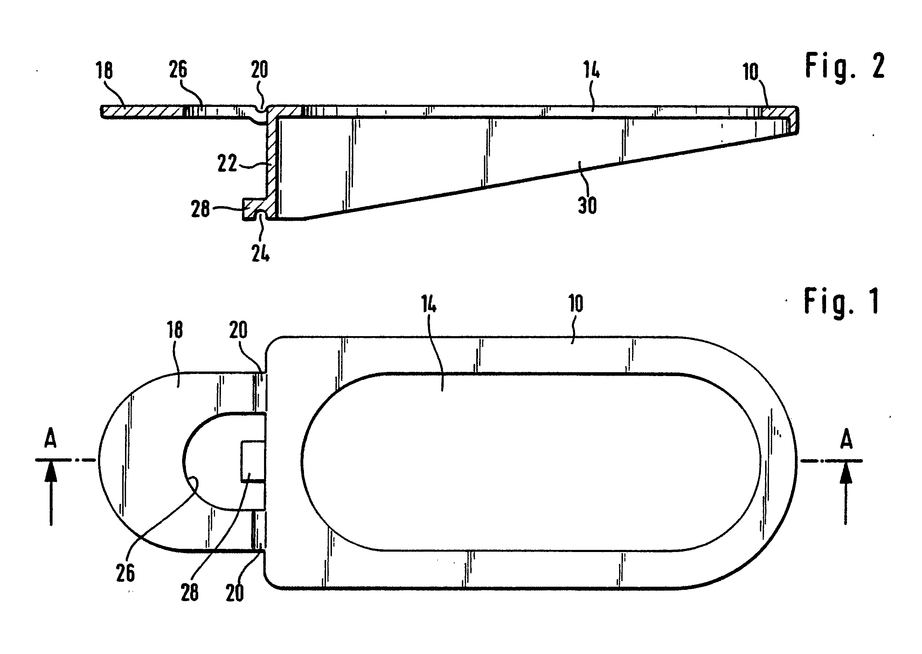

Insbesondere die Figs. 2 und 4 verdeutlichen, daß der Stirnflansch 22 mit einer die zweite Kerbe 24 ausbildenden Nase 28 versehen ist.

Fig. 2 verdeutlicht weiter, daß der Aufnahmeabschnitt einen umlaufenden Flansch 30 hat, der schräg mit in Richtung auf den Stirnflansch 22 hin zunehmender Höhe ausgebildet ist.

Der Vogelbesitzer wird bei erstmaligem Verwenden des Halters ein Portionsschälchen von dem Strang (Fig. 5) abbrechen. Sodann wird er den Halter zwischen zwei horizontal verlaufende Streben des Vogelkäfigs einsetzen, bis die quer verlaufenden Streben in die beiden Kerben 20 und 24 einrasten. Dabei erleichtert die schräg verlaufende Ausbildung des umlaufenden Flansches 30 das erforderliche leichte Aufweiten der Streben des Vogelkäfigs.

Sodann (ggf. aber auch vor dem Einsetzen des Halters) wird das Portionsschälchen in den Durchbruch 14 eingesetzt und die das Portionsschälchen abdeckende Folie abgezogen.

Nach dem Leeren des Portionsschälchens durch den Vogel wird einfach ein weiteres Portionsschälchen von dem Strang (Fig. 5) abgebrochen und nach Entfernen des leeren Portionsschälchens aus dem Halter in diesen eingesetzt. Dabei ist es möglich, den Halter jeweils von den ihn einklemmenden Streben zu lösen, dies ist jedoch regelmäßig nicht erforderlich, da der Vogelbesitzer in den Käfig hineingreifen kann.

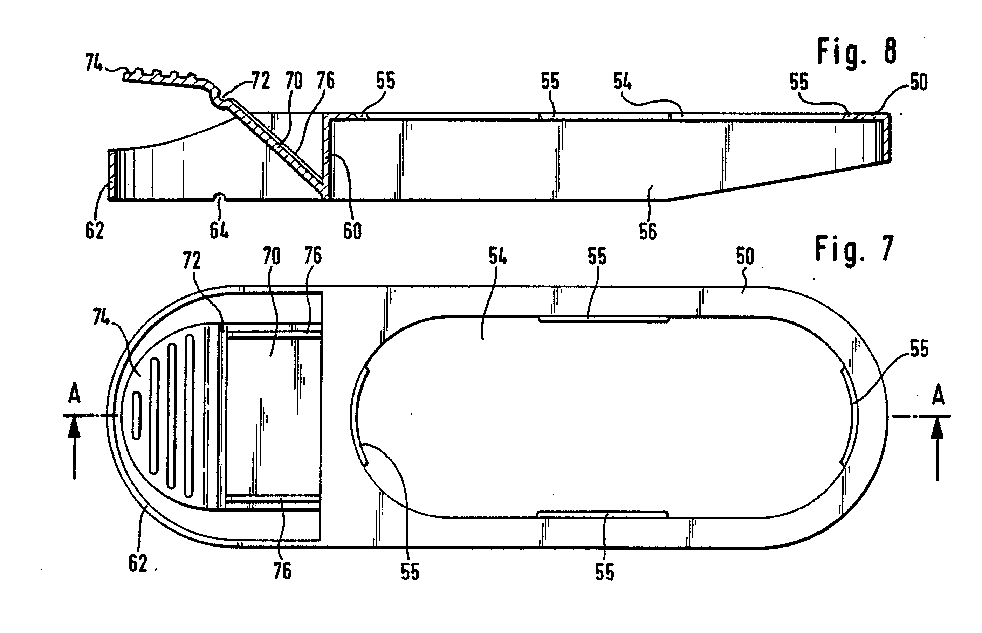

Die in Fig. 7 dargestellte alternative Ausführungsform des erfindungsgemäßen Halters besteht aus einem sich bei Verwendung horizontal erstreckenden Aufnahmeabschnitt 50 mit einem ovalen Durchbruch 54, der in Teilbereichen mit nach innen gerichteten Vorsprüngen 55 versehen ist, deren Funktion weiter unten noch näher erläutert wird. Rechtwinklig und nach unten abstehend ist an einem Ende des Aufnahmeabschnittes 50 ein Flansch 60 angesetzt. An dessen unteres Ende angesetzt, erstreckt sich in Längsrichtung des Aufnahmeabschnitts von diesem weg eine flexible Rastplatte 70 schräg nach oben bis über die Oberkante des Aufnahmeabschnitts 50 hinweg. Kurz unterhalb ihres höchsten Punktes ist eine erste quer verlaufende Kerbe 72 vorgesehen. Im Anschluß daran ist die Rastplatte 70 mit einem Griffabschnitt 74 versehen, der im wesentlichen halbkreisförmig ausgebildet und an seiner Oberseite geriffelt ist. Der Griffabschnitt 74 bildet dabei in der dargestellten Ausführungsform mit dem Rest der Rastplatte 70 einen stumpfen Winkel, so daß er im wesentlichen horizontal verläuft.

Ebenfalls an den Flansch 60 angesetzt und sich in Längsrichtung des Aufnahmeabschnitts 50 von diesem weg erstreckend, ist ein Steg 62 in Form eines halbierten Ovals vorgesehen, der zunächst die gleiche Höhe wie der Flansch 60 aufweist, dann aber mit abnehmender Höhe ausgebildet ist und sich bis über das Ende des Griffabschnitts 74 der Rastplatte 70 hinaus erstreckt. Der Steg 62 weist an seiner Unterkante bei Verwendung vertikal mit der ersten Kerbe 72 ausgerichtete Kerben 64 auf.

Beim Einsetzen des erfindungsgemäßen Halters zwischen die Querstreben eines Vogelkäfigs wird diese am Griffabschnitt 74 der Rastplatte 70 sowie am Steg 62 gegriffen, wobei die Unterkante des Steges 62 vorzugsweise auf dem Zeigefinger des Benutzers aufliegt und der Griffabschnitt 74 vom Daumen betätigt wird. Nachdem der Aufnahmeabschnitt 50 zwischen den Querstäben hindurchgeführt worden ist, wobei, um diesen Vorgang zu erleichtern, der vordere Abschnitt des um den Aufnahmeabschnitt 50 umlaufenden Flansches 56 abgeschrägt ist, wird der Griffabschnitt 74 und damit die gesamte Rastplatte 70 mit der quer verlaufenden Kerbe 72 heruntergedrückt, bis die an der Unterkante des Steges 62 vorgesehenen Kerben 64 in die untere Querstrebe eingerastet sind. Bei waagerechter Stellung des erfindungsgemäßen Halters rastet dann die Kerbe 72 in der Rastplatte 70 bei langsamen Loslassen des Griffabschnitts 74 in die entsprechende obere Querstrebe ein. Durch die Rückstellkraft der vorgespannten Rastplatte 70 wird der erfindungsgemäße Halter fest und sicher zwischen den Querstreben des Vogelkäfigs gehalten.

Vor dem Einsetzen des erfindungsgemäßen Halters zwischen die Querstreben eines Vogelkäfigs wird der Vogelbesitzer, wie bereits zuvor beschrieben, zunächst ein Portionsschälchen 12 von einem entsprechenden Vorratsstrang (Fig. 5) an der dafür gesehenen Bruchkante 84 abbrechen. Als nächstes wird er das Portionsschälchen 12 in den Durchbruch 54 des Aufnahmeabschnitts 50 einsetzen. Dabei kommt die Stufe 82 unterhalb der Oberkante des Portionsschälchens 12 auf den nach innen gerichteten Vorsprüngen 55 des Durchbruchs 54 zu liegen. Nach Überwindung eines gewissen Druckpunktes rastet dann das Portionsschälchen 12 fest in den Durchbruch 54 des Aufnahmeabschnitts 50 ein. Damit ist auch sichergestellt, daß das Portionsschälchen 12 nicht ohne weiteres vom Vogel aus dem erfindungsgemäßen Halter herausgerissen werden kann. Die Vorsprünge 55 können selbstverständlich auch im Durchbruch 14 der ersten Ausführungsform vorgesehen sein.

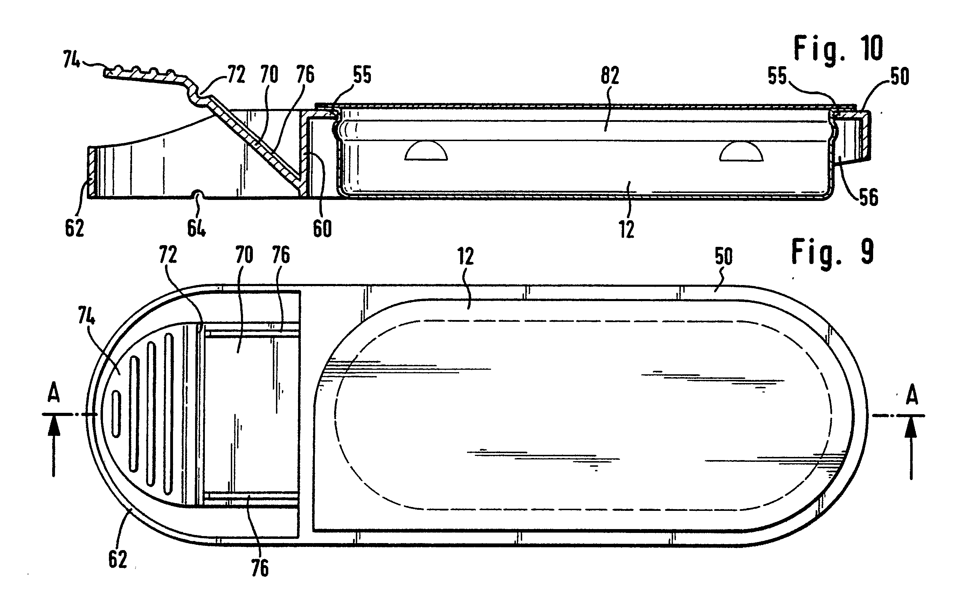

In den Figs. 9 und 10 ist der erfindungsgemäße Halter mit entsprechend eingesetztem Portionsschälchen 12 dargestellt. Dabei ist auch gut die erwähnte Stufe 82 zu erkennen. Schließlich wird, wie ebenfalls bereits zuvor beschrieben, die das Portionsschälchen abdeckende Folie abgezogen und der erfindungsgemäße Halter mit eingesetztem und geöffneten Portionsschälchen zwischen die Querstreben des Vogelkäfigs eingesetzt.

Nach dem Leeren des Portionsschälchens 12 durch den Vogel kann zur Vereinfachung der Handhabung der gesamte Halter durch einfaches Herunterdrücken des Griffabschnitts 74 der Rastplatte 70 wieder entrastet und zwischen den Querstreben des Vogelkäfigs herausgezogen werden. Nach Entfernung des leeren Portionsschälchens 12 kann dann ein neues eingesetzt werden, woraufhin der Halter wieder in entsprechender Weise eingesetzt wird. Selbstverständlich ist es auch möglich, wie zuvor erwähnt, die Portionsschälchen zu wechseln, ohne den Halter von den Querstreben des Vogelkäfigs zu lösen.

Der hier vorgeschlagene Halter ermöglicht es, dem Vogel das Vogelfutter hygienisch anzubieten. Da das leere Schälchen ersetzt wird, besteht die Gefahr einer anhaltenden Verschmutzung mit der Gefahr einer bakteriellen Verseuchung nicht.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

Bezugszeichenliste

10 Aufnahmeabschitt
12 Portionsschälchen
14 Durchbruch
18 Griffabschnitt
20 Kerbe
22 Stirnflansch
24 Kerbe
26 Griffausnehmung
28 Nase
30 umlaufender Flansch
50 Aufnahmeabschnitt
54 Durchbruch
55 Vorsprung
56 umlaufender Flansch
60 Flansch
62 Steg
64 Kerben
70 Rastplatte
72 Kerbe
74 Griffabschnitt
76 Verstärkungssteg
82 Stufe (in 12)
84 Bruchkante

**Ansprüche**

1. Halter für in Portionsschälchen abgepacktes Vogelfutter, gekennzeichnet durch
- einen sich bei Verwendung horizontal erstreckenden Aufnahmeabschnitt (10) mit einem eine Aufnahme für das Portionsschälchen (12) bildenden Durchbruch (14), einen sich an diesen anschließenden Griffabschnitt (18) und einer zwischen Aufnahmeabschnitt (10) und Griffabschnitt (18) angeordneten quer zu deren Erstreckung verlaufenden ersten Kerbe (20); und
- einen an die Kerbe (20) angrenzend rechtwinklig an den Aufnahmeabschnitt (10) angesetzten Stirnflansch (22), der an seinem dem Aufnahmeabschnitt (10) abgewandten Ende mit einer bei Verwendung vertikal mit der ersten Kerbe (20) ausgerichteten zweiten Kerbe (24) versehen ist.

2. Halter nach Anspruch 1, dadurch gekennzeichnet, daß der Durchbruch (14) in dem Aufnahmeabschnitt (10) oval ausgebildet ist.

3. Halter nach Anspruch 1 oder 2, dadurch gekennzeichnet, daß der Griffabschnitt (18) die Form eines entlang seiner Nebenachse halbierten Ovals hat.

4. Halter nach einem der vorangehenden Ansprüche, dadurch gekennzeichnet, daß der Griffabschnitt (18) mit einer zu dem Stirnflansch (22) hin offenen Griffausnehmung (26) versehen ist.

5. Halter nach einem der vorangehenden Ansprüche, dadurch gekennzeichnet, daß die Griffausnehmung (26) die Form eines entlang seiner Nebenachse halbierten Ovals hat.

6. Halter nach einem der vorangehenden Ansprüche, dadurch gekennzeichnet, daß der Stirnflansch (22) mit einer die zweite Kerbe (24) ausbildenden Nase (28) versehen ist.

7. Halter nach einem der vorangehenden Ansprüche, gekennzeichnet durch einen um den Aufnahmeabschnitt (10) umlaufenden Flansch (30).

8. Halter nach Anspruch 7, dadurch gekennzeichnet, daß der umlaufende Flansch (30) schräg mit in Richtung auf den Stirnflansch (22) hin zunehmender Höhe ausgebildet ist.

9. Halter für in Portionsschälchen abgepacktes Vogelfutter, gekennzeichnet durch
- einen sich bei Verwendung horizontal erstreckenden Aufnahmeabschnitt (50) mit einem eine Aufnahme für das Portionsschälchen bildenden Durchbruch (54) und einen an den Aufnahmeabschnitt (50) rechtwinklig und nach unten abstehend angesetzten Flansch (60), wobei eine an den Flansch (60) angesetzte, sich in Längsrichtung des Aufnahmeabschnitts (50) von diesem weg erstreckende flexible Rastplatte (70) vorgesehen ist, die sich schräg nach oben bis über die Oberkante des Aufnahmeabschnitts (50) hinweg erstreckt und an und nahe ihrem höchsten Punkt eine erste quer verlaufende Kerbe (72) aufweist; und ein sich in Längsrichtung des Aufnahmeabschnitts (50) von diesem weg erstreckender, rechtwinklig an den Flansch (60) angesetzter Steg (62), der an seiner Unterkante bei Verwendung vertikal mit der ersten Kerbe (72) ausgerichtete zweite Kerben (64) aufweist.

10. Halter nach Anspruch 9, dadurch gekennzeichnet, daß der Durchbruch (54) in dem Aufnahmeabschnitt (50) oval ausgebildet ist.

11. Halter nach Anspruch 9 oder 10, dadurch gekennzeichnet, daß der Steg (62) in Form eines entlang seiner Nebenachse halbierten Ovals ausgebildet ist, das sich bis über das vom Aufnahmeabschnitt (50) abgewandte Ende der Rastplatte (70) hinaus erstreckt, mit beiden Enden rechtwinklig an den Flansch (60) angesetzt ist und zwei entsprechend ausgerichtete zweite Kerben (74) aufweist.

12. Halter nach einem der Ansprüche 9 - 11, dadurch gekennzeichnet, daß die Rastplatte (70) im Anschluß an die erste Kerbe (72) mit einem Griffabschnitt (74) versehen ist.

13. Halter nach Anspruch 12, dadurch gekennzeichnet, daß der Griffabschnitt (74) halbkreisförmig ausgebildet ist, wobei die Grundseite dieses Kalbkreises an der ersten Kerbe (72) anliegt.

14. Vorrichtung nach Anspruch 12 oder 13, dadurch gekennzeichnet, daß der Griffabschnitt (74) an seiner Oberseite geriffelt ist.

15. Vorrichtung nach einem der Ansprüche 9 - 14, dadurch gekennzeichnet, daß die Rastplatte (70) an ihrer Ober-und/oder Unterseite mit Verstärkungsstegen (76) versehen ist.

16. Halter nach einem der Ansprüche 9 - 15, dadurch gekennzeichnet, daß der Steg (62) im Bereich des Griffabschnittes (74) mit in Richtung vom Aufnahmeabschnitt (50) weg abnehmender Höhe ausgebildet ist.

17. Halter nach einem der Ansprüche 9 - 16, gekennzeichnet durch einen um den Aufnahmeabschnitt (50) umlaufenden Flansch (56).

18. Halter nach Anspruch 17, dadurch gekennzeichnet, daß der umlaufende Flansch (56) an seinem von der Rastplatte entfernten Ende abgeschrägt mit in Richtung von der Rastplatte (70) weg abnehmender Höhe ausgebildet ist.

19. Halter nach einem der vorangehenden Ansprüche, dadurch gekennzeichnet, daß der Durchbruch (14, 54) zumindest in Teilbereichen mit nach innen gerichteten Vorsprüngen (55) versehen ist.

Fig. 2

Fig. 1

Fig. 4

Fig. 3

Fig. 6

12    84

Fig. 5

A    A

12    84

EP 0 391 506 A1

Fig. 8

Fig. 7

EP 0 391 506 A1

Fig. 10

Fig. 9

Fig. 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-094355 (CARNATION ITALIA S.P.A.) <br> * Seite 3, Zeilen 9 - 20; Figuren 3, 5 * <br> --- | 1 | A01K39/014 <br> A01K1/035 |
| A | DE-A-2522118 (HEUSER) <br> * das ganze Dokument * <br> --- | 1 | |
| A | US-A-1537615 (MCCONNELL) <br> * das ganze Dokument * <br> --- | 9 | |
| A | US-A-3707949 (LIPPI) <br> * Figur 2 * <br> --- | 9 | |
| A | DE-B-1143459 (DÖPFER) <br> --- | | |
| A | NL-A-8501230 (VAN DER VEER) <br> --- | | |
| A | GB-A-861992 (BLACK) <br> --- | | |
| A | GB-A-800654 (GLEDHILL) <br> --- | | |
| A | US-A-3789800 (STEUDLER, JR.) <br> ----- | | RECHERCHIERTE SACHGEBIETE (Int. Cl.5 ) <br><br> A01K |

Der vorliegende Recherchenbericht wurde für alle Patentansprüche erstellt

| Recherchenort | Abschlußdatum der Recherche | Prüfer |
|---|---|---|
| DEN HAAG | 14 JUNI 1990 | VON ARX V.U. |